# EUROPEAN PATENT SPECIFICATION

(11) **EP 2 573 573 B1**
(45) Date of publication and mention of the grant of the patent: **02.04.2014**
(21) Application number: 12184127.4
(22) Date of filing: 12.09.2012
(51) Int. Cl.: G01P 5/00

(54) **Visualization Processing Method and Apparatus**
Verfahren und Vorrichtung zur Visualisierungsverarbeitung
Procédé et appareil de traitement de visualisation

(30) Priority: 20.09.2011 JP 2011204166
(43) Date of publication of application: 27.03.2013
(73) Proprietor: FUJITSU LIMITED, Kawasaki-shi, Kanagawa 211-8588 (JP)
(72) Inventor: Hirahara, Takao, Kawasaki-shi, Kanagawa 211-8588 (JP); Watanabe, Masahiro, Kawasaki-shi, Kanagawa 211-8588 (JP)
(74) Representative: Stebbing, Timothy Charles

(56) References cited:
- US-A- 5 905 568
- US-A1- 2005 283 323
- US-B1- 6 496 262

## Description

This technique relates to a visualization method and apparatus.

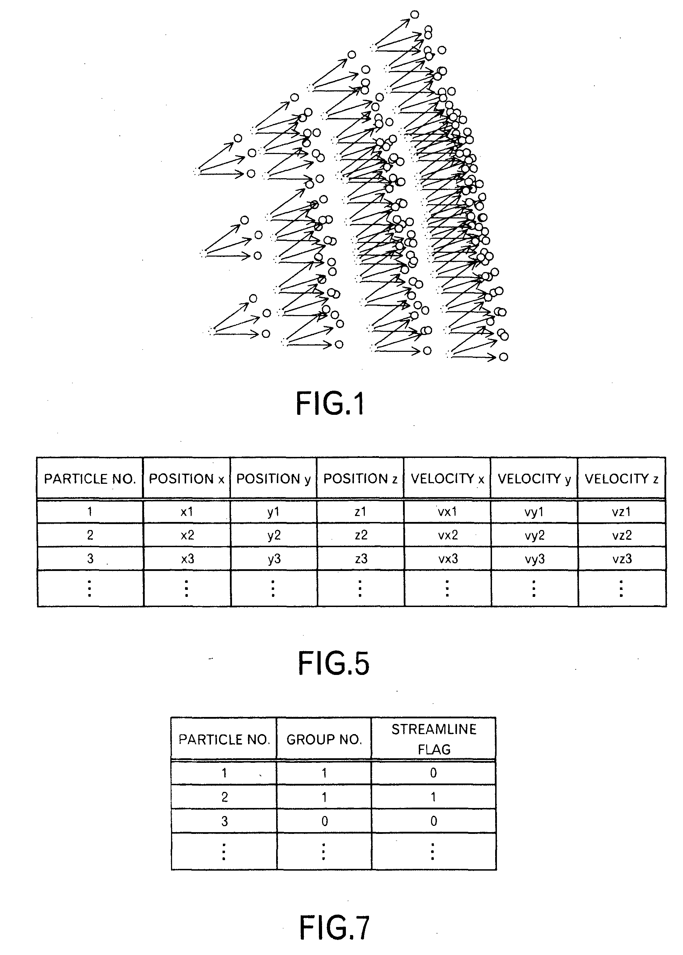

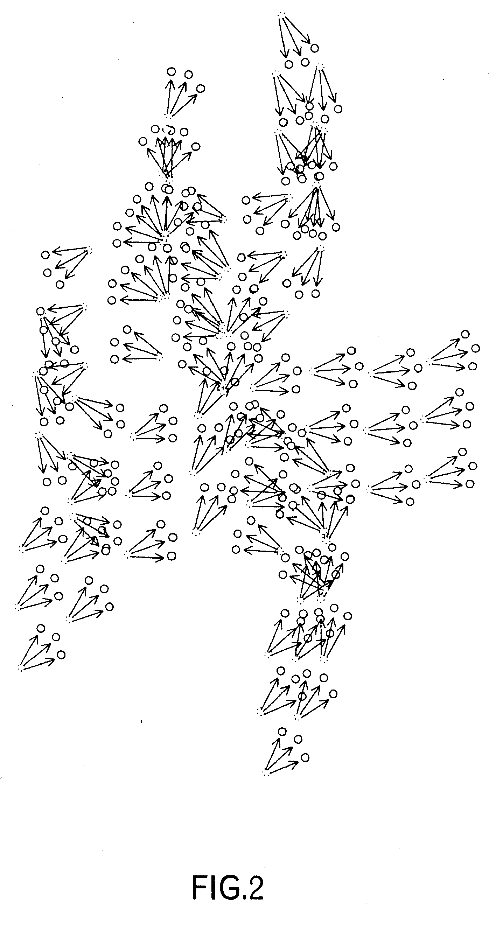

As a method for visualizing the velocity field of objects such as fluids, there is a method of visualizing the flow of objects by using objects such particles or streamlines (hereafter, referred to as particle flow). FIG. 1 and FIG. 2 illustrate examples of flows that are visualized by the particle flow. FIG. 1 is a drawing that illustrates particles that express laminar flow, and FIG. 2 is a drawing that illustrates particles that express turbulent flow. Here, particles are affected by diffusion, where a particle that is illustrated by a dotted line represents the position of the particle at the previous calculation step, and a particle that is illustrated by a normal line represents the position of the particle at the current calculation step. Because a streamline illustrated by an arrow is attached to each of the particles at the previous calculation step, it is easy to know the direction of movement of each particle. FIG. 2 illustrates only particles that move in a direction close to the direction of the main flow.

Incidentally, in recent years, the computing performance of computers has been improving, so it is possible to visualize the flow in more detail by displaying a lot of objects. However, when many objects are displayed, objects may collect in a certain area, so instead it may become difficult to know the flow condition. For example, in a simple laminar flow as illustrated in FIG. 1, no problems may occur, however, in the turbulent flow having complicated structure such as illustrated in FIG. 2, it becomes extremely difficult to understand the movement of particles in an area where objects are concentrated.

Particularly, in the case of simulating the movement of smoke or dust in a diffusion field, or simulating aerodynamic characteristics in the design of an industrial product, the display of streak lines may be used to illustrate many particles that increase over time in a one-to-many relationship. In such a case, by displaying many objects, particles whose movement is being tracked may be covered by other particles and become difficult to see, or may further become lost from view.

Conventionally, there has been a technique that virtual particles are placed in a flow channel of the substance, and based on flow velocity field data, which is data of the velocity field of the flow, the flow velocities at the positions of virtual particles and the displacements after a small unit of time are repeatedly calculated in order to obtain the data for the streak lines of the virtual particles. However, according to such a technique, when the flow has a complicated structure, streak lines may overlap, and it may become become difficult to understand the movement of the virtual particles.

Moreover, there is a visualization method to make it possible to easily understand flows that occur around an object such as an elliptical body or car by performing coloring. However, according to such a method of visualization, when the structure of the flow becomes complicated, erroneous recognition may occur.

In other words, there is no technique for making it easy to understand movement of particles in the diffusion field.

As one aspect, an object of this technique is to provide a technique for making it easy to understand the movement of particles in the diffusion field.

A visualization processing method relating to one aspect of this technique includes: (A) classifying plural particles in a diffusion field into plural groups, based on data of positions and velocities of the plural particles, so that particles between which a distance is equal to or less than a predetermined distance and of which an absolute value of a difference between velocity vectors is equal to or less than a predetermined value among the plural particles are classified to a same group; (B) first generating, for each of the plural groups, group display data for particles belonging to the group; and (C) second generating display data by attaching the generated group display data to particle display data for displaying the particles belonging to the group.

Reference will now be made, by way of example, to the accompanying Drawings, in which:
FIG. 1 is a diagram depicting an example of a flow displayed by a particle flow;
FIG. 2 is a diagram depicting an example of the flow displayed by the particle flow;
FIG. 3 is a diagram depicting a functional block diagram of an information processing apparatus in embodiments;
FIG. 4 is a diagram depicting a main processing flow;
FIG. 5 is a diagram depicting an example of data stored in a velocity data storage unit;
FIG. 6 is a diagram depicting the main processing flow;
FIG. 7 is a diagram depicting an example of data stored in a particle table storage unit;
FIG. 8 is a diagram depicting a processing flow of a group display generation processing in a first embodiment;
FIG. 9 is a diagram depicting an example of data stored in a grouping table in the first embodiment;
FIG. 10 is a diagram depicting a processing flow of the group display generation processing in the first embodiment;
FIG. 11 is a diagram depicting an example of data stored in the grouping table in the first embodiment;
FIG. 12 is a diagram depicting an example of a skeleton structure;
FIG. 13 is a diagram to explain a generation procedure of the skeleton structure;
FIG. 14 is a diagram depicting the generation procedure of the skeleton structure;
FIG. 15 is a diagram depicting the generation procedure of the skeleton structure;
FIG. 16 is a diagram depicting an example of data stored in the grouping table in the first embodiment;
FIG. 17 is a diagram to explain the generation procedure of the skeleton structure;
FIG. 18 is a diagram depicting an example of data stored in the grouping table in the first embodiment;
FIG. 19 is a diagram depicting an example of data stored in the grouping table in the first embodiment;
FIG. 20 is a diagram to explain the skeleton structure;
FIG. 21 is a diagram depicting the processing flow of the grouping display generation processing in the first embodiment;
FIG. 22 is a diagram to explain the generation method of the group display;
FIG. 23 is a diagram to explain the generation method of the group display;
FIG. 24 is a diagram to explain coloring of the group display;
FIG. 25 is a diagram to explain the coloring of the group display;
FIG. 26 is a diagram depicting a display example of the group display;
FIG. 27 is a diagram depicting a display example of the group display;
FIG. 28 is a diagram depicting a processing flow of the streamline drawing processing;
FIG. 29 is a diagram depicting a display example of the streamline;
FIG. 30 is a diagram depicting a display example of the streamline;
FIG. 31 is a diagram depicting an example of a flow displayed by the particle flow;
FIG. 32 is a diagram depicting an example of the flow displayed by the particle flow;
FIG. 33 is a diagram depicting an example of the flow to which the group display is attached;
FIG. 34 is a diagram depicting an example of the flow to which the group display is attached;
FIG. 35 is a diagram depicting a processing flow of a group display generation processing in a second embodiment;
FIG. 36 is a diagram depicting a straight line obtained by the least squares method;
FIG. 37 is a diagram to explain a generation procedure of the group display;
FIG. 38 is a diagram depicting an example of data stored in the grouping table in the second embodiment;
FIG. 39 is a diagram depicting a processing flow of the group display generation processing in the second embodiment;
FIG. 40 is a diagram depicting an example of data stored in the grouping table in the second embodiment;
FIG. 41 is a diagram to explain the generation procedure of the group display;
FIG. 42 is a diagram to explain the generation procedure of the group display; and
FIG. 43 is a functional block diagram of a computer.

### [Embodiment 1]

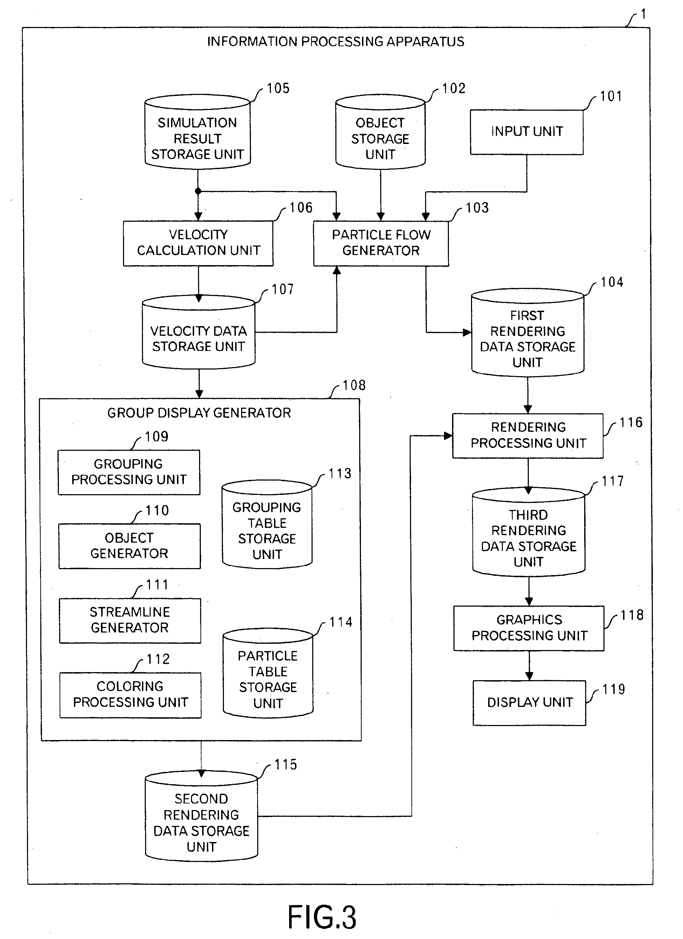

FIG. 3 illustrates a functional block diagram of an information processing apparatus 1 relating to a first embodiment. The information processing apparatus 1 includes an input unit 101, an object storage unit 102, a particle flow generator 103, a first rendering data storage unit 104, a simulation result storage unit 105, a velocity calculation unit 106, a velocity data storage unit 107, a group display generator 108, a second rendering data storage unit 115, a rendering processing unit 116, a third rendering data storage unit 117, a graphics processing unit 118 and a display unit 119. The group display generator 108 includes a grouping processing unit 109, an object generator 110, a streamline generator 111, a coloring processing unit 112, a grouping table storage unit 113 and a particle table storage unit 114. The object storage unit 102 stores data of objects such as arrows for the streamlines and spheres for the particles.

When accepting a visualization instruction from the user of the information processing apparatus 1, the input unit 101 sends a visualization processing request to the particle flow generator 103. The velocity calculation unit 106 uses simulation data that is stored in the simulation result storage unit 105 to calculate velocity field data (for example, velocity data for the particles in three dimensions), and stores the calculated velocity field data in the velocity data storage unit 107. The particle flow generator 103 uses the simulation data that is stored in the simulation result storage unit 105, data of objects to be rendered, which is stored in the object storage unit 102, and the velocity field data that is stored in the velocity data storage unit 107 to generate rendering data for displaying the flow using the particle flow, and stores the generated data in the first rendering data storage unit 104. The grouping processing unit 109 uses the velocity field data that is stored in the velocity data storage unit 107 to perform a grouping processing of the particles, and stores the grouping data, which are the results of the grouping processing, in the grouping table storage unit 113. The object generator 110 uses the grouping data that is stored in the grouping table storage unit 113, and data of the particle table that is stored in the particle table storage unit 114 to perform a processing to generate group display data, and stores the generated group display data in the second rendering data storage unit 115. The streamline generator 111 carries out a processing to generate streamlines for the group display that was generated by the object generator 110. The coloring processing unit 112 carries out a processing to color the group display that was generated by the object generator 110. The rendering processing unit 116 carries out a processing by using the rendering data that is stored in the first rendering data storage unit 104 and the rendering data for the group display, which is stored in the second rendering data storage unit 115, and stores display data, which is a result of the processing, in the third rendering data storage unit 117. The graphics processing unit 118 carries out a well-known process for displaying the data that is stored in the third rendering data storage unit 117. The display unit 119 displays the processing results from the graphics processing unit 118 on a display device.

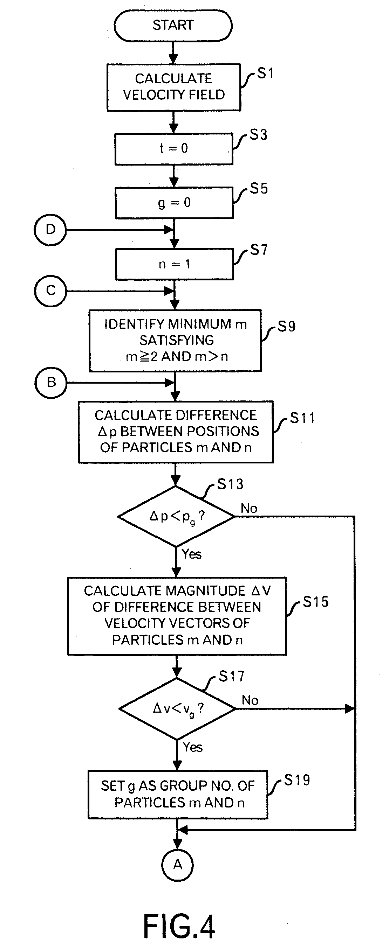

Next, the operation of the information processing apparatus 1 illustrated in FIG. 3 will be explained using FIG. 4 to FIG. 34. The simulation results that are related to the positions of particles in the diffusion field, which were calculated using a diffusion equation or the like, are stored in the simulation result storage unit 105. In this embodiment, the simulation results for a time range from time t = 0 to time t = N (N is a natural number that is setbeforehand) are stored. Moreover, the calculation is carried out by a simulator (not illustrated in the figure), and the results are stored in the simulation result storage unit 105. In the following, "t" and "g" are integers, which are equal to or greater than 0, and "m" and "n" are natural numbers.

First, in response to the instruction, for example, from the user, the velocity calculation unit 106 uses the data stored in the simulation result storage unit 105 to calculate the velocity field, and stores the velocity field data, which represents the calculation results, in the velocity data storage unit 107 (FIG. 4 : step S1). The velocity field data may be calculated by a well-known method such as calculating differences between positions of the particles at time K and at time K - 1.

FIG. 5 illustrates an example of velocity field data that is stored in the velocity data storage unit 107. In the example in FIG. 5, the particle number, position in the x-axis direction of the particle, position in the y-axis direction of the particle, position in the z-axis direction of the particle, velocity in the x-axis direction of the particle, velocity in the y-axis direction of the particle, and velocity in the z-axis direction of the particle are stored for each particle. Such a kind of velocity field data that includes the position and velocity of each particle is stored for each time (t = 0 to N).

Then, the grouping processing unit 109 in the group display generator 108 sets "0" as the initial value of time t (step S3), and sets "0" as the initial value of the group number g (step S5).

The grouping processing unit 109 sets "1" to the particle number n (step S7). Then, the grouping processing unit 109 identifies the minimum natural number that satisfies the relationships m ≥ 2, and m > n, and sets the identified natural number to the particle number m (step S9).

The grouping processing unit 109 then uses the position data that is stored in the velocity data storage unit 107 to calculate the difference (in other words, the distance) Δp between the positions of two particles (here, particle m and particle n) at time t, and stores the result in a storage device such as a main memory (step S11).

The grouping processing unit 109 then determines whether or not Δp satisfies the relationship Δp < p_{g} (step S13). Here, p_{g} is a preset reference value for the distance.

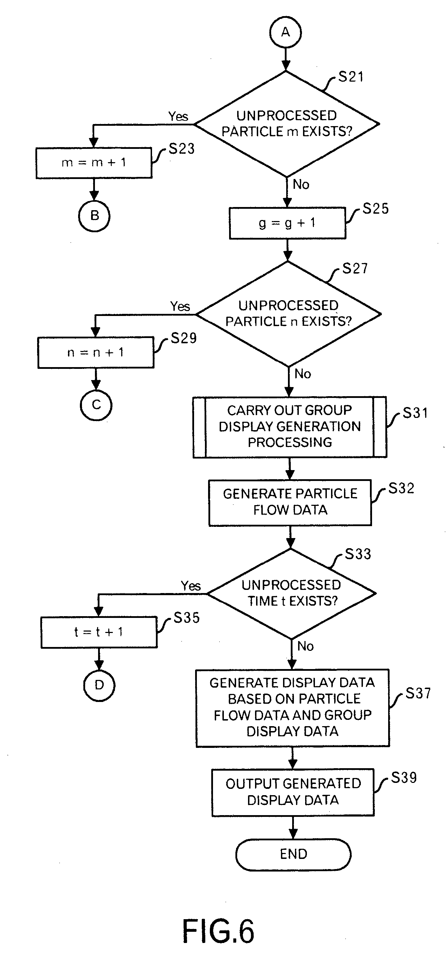

When it is determined that the relationship Δp < p_{g} is not satisfied (step S13: NO route), the particle m does not belong to the same group as the particle n, so the processing moves to step S21 in FIG. 6 via a terminal A.

On the other hand, when it is determined that the relationship Δp < p_{g} is satisfied (step S13: YES route), the grouping processing unit 109 uses the velocity data that is stored in the velocity data storage unit 107 to calculate the absolute value Δv of a vector representing the difference between the velocity vector of the particle m and velocity vector of the particle n at time t, and stores the result in the storage device such as the main memory (step S15).

The grouping processing unit 109 then determines whether or not Δv satisfies the relationship Av < v_{g} (step S17). Here, v_{g} is a preset reference value for the magnitude of the velocity. At the step S15, a velocity vector, which corresponds to the difference between two velocity vectors, is calculated, and the absolute value of the calculated velocity vector is calculated. Therefore, when the direction of the two velocity vectors is very different, the absolute value of the difference between the velocity vectors becomes greater than that obtained when the direction of the two velocity vectors is close. Therefore, when the direction of the two velocity vectors is very different, it is determined that the two particles belong to different groups.

When it is determined that the relationship Δv < v_{g} is not satisfied (step S17: NO route), the particle m does not belong to the same group as the particle n, so the processing moves to the step S21 in FIG. 6 via the terminal A.

On the other hand, when it is determined that the relationship Δv < v_{g} is satisfied (step S17: YES route), the particle m belongs to the same group as the particle n. Therefore, the grouping processing unit 109 sets "g" as the group numbers of the particle m and particle n in the particle table that is stored in the particle table storage unit 114 (step S19). The processing then moves to the step S21 in FIG. 6 via the terminal A.

FIG. 7 illustrates an example of a particle table that is stored in the particle table storage unit 114. In the example in FIG. 7, a particle number, a group number, and a streamline flag are stored. The streamline flag will be explained later.

Moving to an explanation of FIG. 6, the grouping processing unit 109 determines whether or not there is an unprocessed particle m (step S21). When it is determined that there is an unprocessed particle m (step S21: YES route), the grouping processing unit 109 sets m = m + 1 in order to process the next particle m (step S23). The processing then returns to the step S11 via a terminal B.

On the other hand, when it is determined that there is no unprocessed particle m (step S21: NO route), the grouping processing unit 109 sets g = g + 1 as the group number g that represents the group (step S25). Then, the grouping processing unit 109 determines whether or not there is an unprocessed particle n (step S27).

When it is determined that there is an unprocessed particle n (step S27: YES route), the grouping processing unit 109 sets n = n + 1 as the particle n, in order to process the next particle n (step S29). The processing then returns to the step S9 via a terminal C.

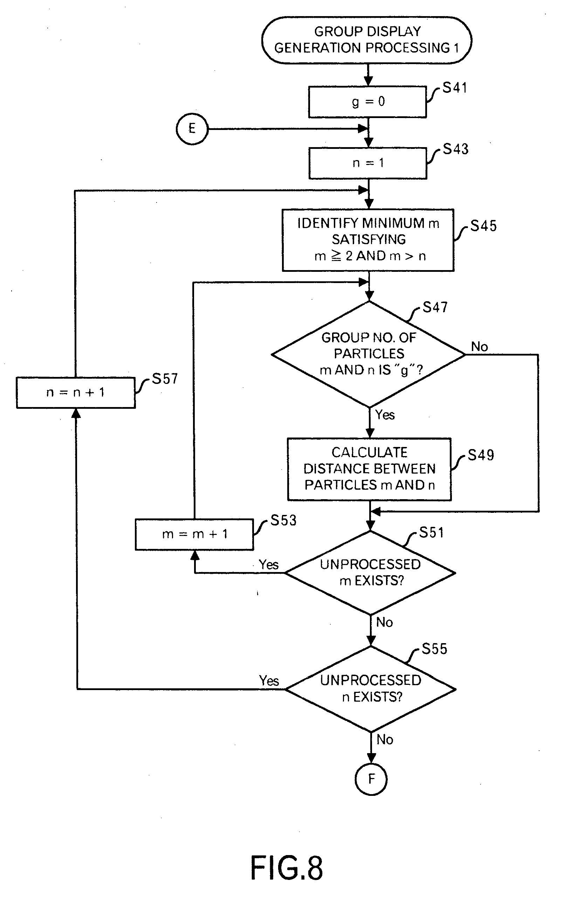

However, when it is determined that there is no unprocessed particle n (step S27: NO route), the object generator 110, the streamline generator 111 and the coloring processing unit 112 carry out a group display generation processing for time t (step S31). The group display generation processing will be explained using FIG. 8 to FIG. 30.

First, the object generator 110 sets "0" to the group number g (FIG. 8: step S41), and sets "1" to the particle number n (step S43). The object generator 110 then identifies the minimum natural number that satisfies the relationships m ≥ 2 and m > n, and sets the identified natural number to the particle number m (step S45).

The object generator 110 then searches the particle table by the particle number m and particle number n, and determines whether or not the group number of the particle m and particle n is g (step S47). In other words, the object generator 110 determines whether or not the particle m and particle n belong to the same group g.

When it is determined that the group number of either particle m or particle n is not g (step S47: NO route), the processing moves to step S51.

On the other hand, when it is determined that the group number of both particle m and particle n is g (step S47: YES route), the object generator 110 uses the position data that is stored in the velocity data storage unit 107 to calculate the length of the line segment that connects the particle m and particle n at time t, or in other words, the distance between the particles m and n, and stores the calculation result in the grouping table storage unit 113 (step S49).

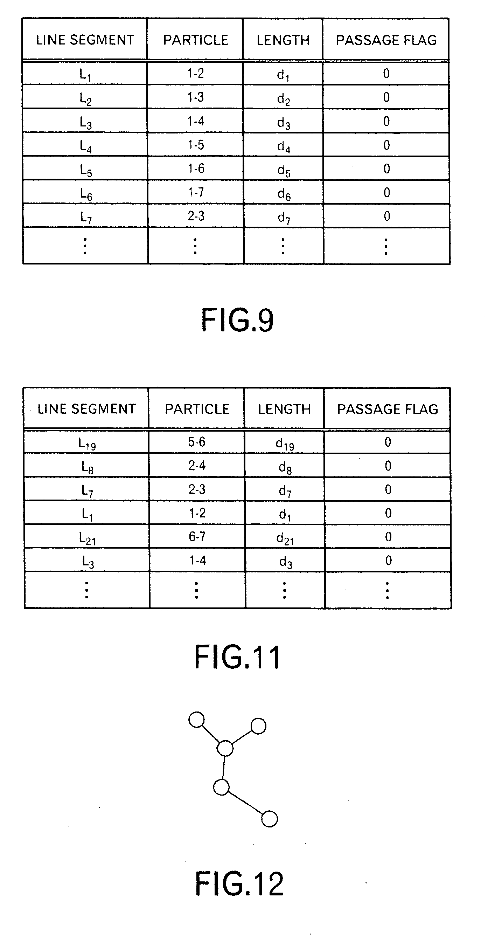

FIG. 9 illustrates an example of the grouping table that is stored in the grouping table storage unit 113. In the example in FIG. 9, an identifier for a line segment that connects particles, particle numbers on both ends of the line segment, the length of the line segment, and a passage flag are stored. The passage flag will be explained later. This kind of grouping table is generated for each group.

The object generator 110 then determines whether or not there is an unprocessed particle m (step S51). When it is determined that there is an unprocessed particle m (step S51: YES route), the grouping processing unit 109 sets m = m + 1 in order to process the next particle m (step S53). The processing then returns to the step S47.

On the other hand, when it is determined that there is no unprocessed particle m (step S51: NO route), the object generator 110 determines whether or not there is an unprocessed particle n (step S55). When it is determined that there is an unprocessed particle n (step S55: YES route), the object generator 110 sets n=n + 1 in order to process the next particle n (step S57). The processing then returns to the step S45.

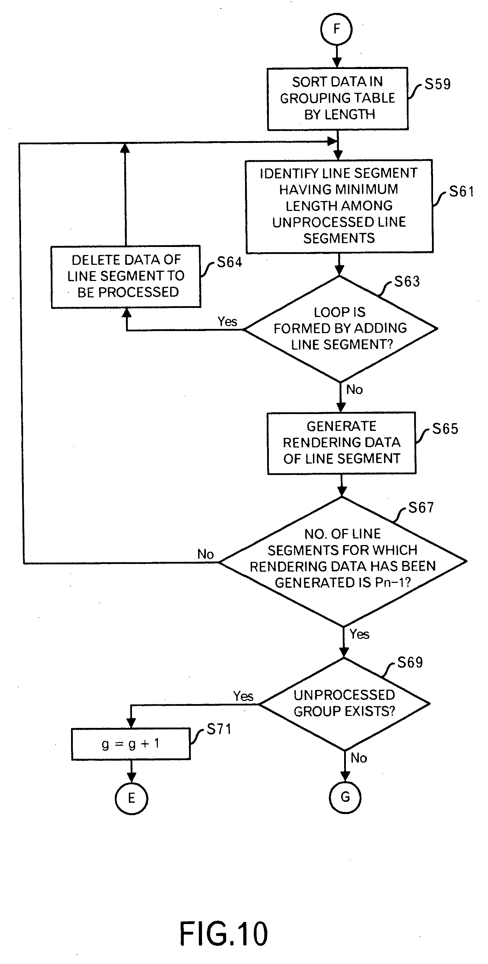

However, when it is determined that there is no unprocessed particle n (step S55: NO route), the processing moves to step S59 in FIG. 10 by way of a terminal F.

Moving to an explanation of FIG. 10, for a group with the group number g, the object generator 110 sorts data in the grouping table according to the length of the line segment (step S59). For example, when the data of the grouping table illustrated in FIG. 9 is sorted, the grouping table becomes as illustrated in FIG. 11.

The object generator 110 then identifies, from among the line segments for which the processing to determine whether the line segment is to be used in the skeleton structure has not been carried out, a line segment that has the shortest length (step S61). The object generator 110 also determines whether or not a loop will be formed inside the skeleton structure being generated, by adding the identified line segment to that skeleton structure (the skeleton structure will be explained in detail later) (step S63). The determination of whether or not the loop is formed by adding the line segment will be described later.

When it is determined that a loop is formed (step S63: YES route), the object generator 110 deletes the data for the line segment that is a processing target from the grouping table (step S64). Then, in order to process the next line segment, the processing returns to the step S61.

However, when it is determined that a loop is not formed (step S63: NO route), the object generator 110 generates rendering data for the identified line segment, and stores the generated data in the storage device (step S65).

The object generator 110 then determines whether or not the number of line segments for which rendering data was generated has reached (Pₙ - 1) (step S67). Here, Pₙ is the number of particles that belong to the group having the group number g. When it is determined that the number of line segments for which rendering data was generated has not reached (Pₙ - 1) (step S67: NO route), the processing returns to the step S61 in order to process the next line segment.

Here, the processing that is carried out from the step S61 to the step S67 will be explained using a detailed example. The processing from the step S61 to the step S67 is a processing for forming line segments between particles, and generating data of a structure (hereafter, called a skeleton structure) such as illustrated in FIG. 12. In FIG. 12 and other drawings, for convenience of the explanation, particles are included in the skeleton structure, however, in the skeleton structure of this embodiment, it is presumed that line segments are included, however particles are not included.

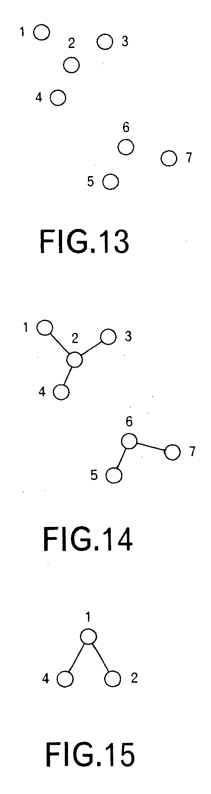

Generating a skeleton structure for a group that includes seven particles, such as illustrated in FIG. 13, will be considered. With the processing from the steps S61 to S67, rendering data is generated for line segments in order from the shortest line segment, so when the processing is carried out for the group illustrated in FIG. 13, a structure such as illustrated in FIG. 14 is generated in the intermediate stage.

When data such as illustrated in FIG. 11 is stored in the grouping table, the line segment to be processed next is a line segment L₃ that connects particle 1 and particle 4. At the step S63, it is determined whether or not a loop is formed by adding a line segment to the skeleton structure being generated, and here it is determined that a loop is formed by connecting the particles 1, 2 and 4 each other. This determination is carried out by a method described in detail in the following.

First, one of the particles (particle 1 and particle 4) on both ends of the line segment L₃ to be added is selected. Here, it is assumed that the particle 1 is selected. The search path that starts from the particle 1 will be considered. More specifically, an n-ary tree structure with the particle 1 as the root is generated using data in the grouping table.

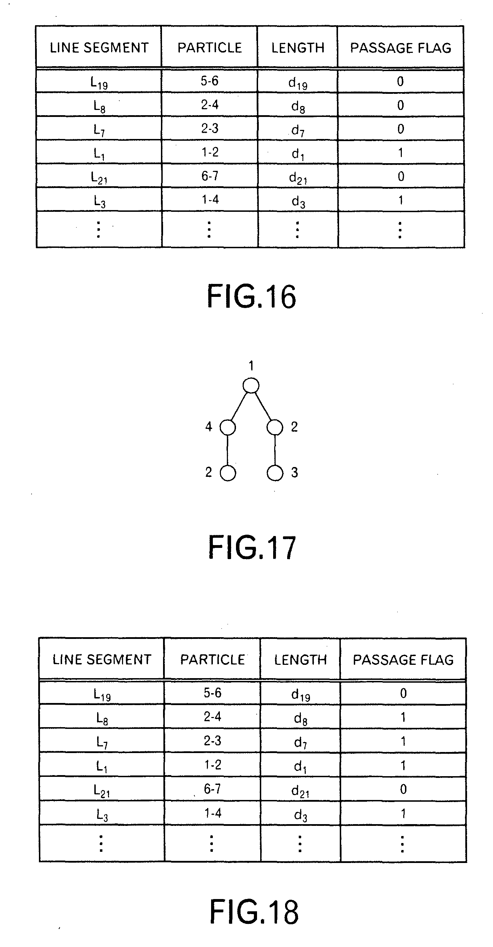

First, a tree structure such as illustrated in FIG. 15 is generated by the line segment L₁, which connects the particle 1 and particle 2 and for which rendering data has already been generated, and line segment L₃ that is to be added this time. In this stage, data such as illustrated FIG. 16 is stored in the grouping table. In the example in FIG. 16, a passage flag "1" is correlated with the line segment L₁ and line segment L₃. The passage flag is data for identifying the line segments that are included in the n-ary tree structure.

Next, for the particles 2 and 4, which are terminals of the n-ary tree structure, line segments L₈ and L₇, which are line segments for which rendering data has already been generated, are added to the n-ary tree structure. The line segment L₈ is a line segment that connects the particle 2 and particle 4 in FIG. 14, and the line segment L₇ is a line segment that connects the particle 2 and particle 3 in FIG. 14. With this processing, a structure as illustrated in FIG. 17 is generated. In this stage, data such as illustrated in FIG. 18 is stored in the grouping table. In the example in FIG. 18, a passage flag "1" is correlated with the line segments included in the n-ary tree structure in FIG. 17. Here, a passage flag "1" is newly correlated with the line segments L₇ and L₈.

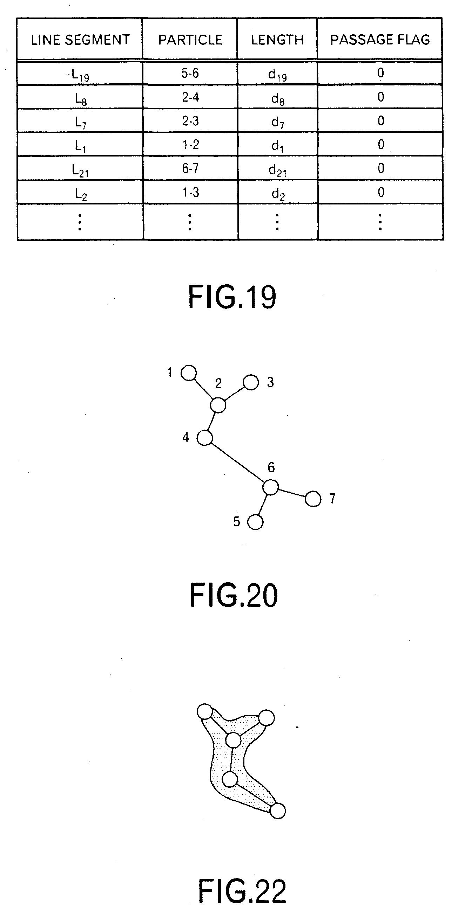

Here, the n-ary tree structure illustrated in FIG. 17 includes two particles 2. This represents that a loop is formed in this skeleton structure. Therefore, it is determined that, in this stage, the line segment L₃ cannot be added to the skeleton structure, and the data for the line segment L₃ is deleted from the grouping table. After the processing at the step S63 is finished, the column of the passage flag in the grouping table is initialized, and the grouping table becomes as illustrated in FIG. 19. FIG. 19 illustrates the grouping table after the data for the line segment L₃ has been deleted. Finally, the skeleton structure as illustrated in FIG. 20 is generated.

As described above, a skeleton structure is generated by connecting line segments between particles in order from the line segment that is the shortest so as not to form loops.

Returning to the explanation of FIG. 10, when it is determined that the number of line segments for which rendering data have been generated has reached (Pₙ - 1) (step S67: YES route), the object generator 110 determines whether or not there are any unprocessed groups (step S69). When it is determined that there is an unprocessed group (step S69: YES route), the object generator 110 sets g = g + 1 as the group number g in order to process the next group (step S71). The processing then returns to the step S43 via a terminal E.

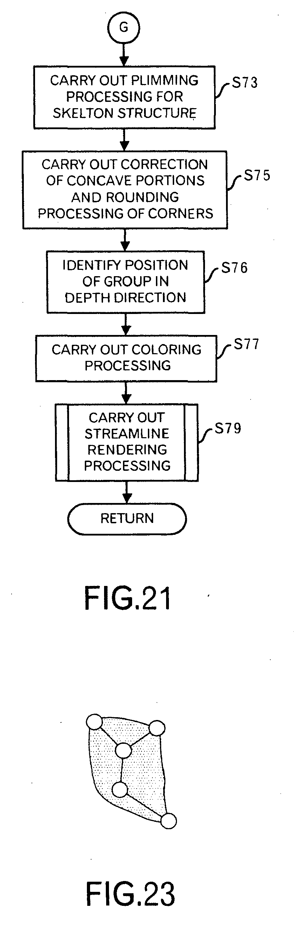

On the other hand, when it is determined that there are no unprocessed groups (step S69: NO route), the processing moves to step S73 in FIG. 21 via a terminal G.

Moving to an explanation of FIG. 21, the object generator 110 carries out a swelling processing for the skeleton structure that was generated for time t, and stores the processing result in a storage device (step S73). At the step S73, a morphological processing (for example, a dilation processing) is carried out. This morphological processing is a well-known processing, so an explanation will be omitted here.

For example, when the processing of the step S73 is carried out for the skeleton structure illustrated in FIG. 12, a structure such as illustrated in FIG. 22 is generated.

The object generator 110 generates group display data by carrying out a correction process on the concave sections and a rounding processing for rounding corners for the structure generated by the processing at the step S73, and stores the generated data in the storage device (step S75). Correction of the concave sections is a smoothing processing by further carrying out a swelling processing on the recessed portions in the portions for which the swelling processing was carried out. The rounding processing of the corner is a processing for eliminating sharp corners by carrying out a swelling processing on sharp portions such as portions that were tips of the segments. By carrying out the processing of the step S75, the group display has a shape close to an elliptical body or spherical body.

For example, when the processing of the step S75 is carried out on the structure illustrated in FIG. 22, a group display such as illustrated in FIG. 23 is generated.

The coloring processing unit 112 uses position data that is stored in the velocity data storage unit 107 to identify the position on the z-axis of each group at time t (step S76). Here, the average of the coordinate values in the z-axis direction of the particles belonging to a group is taken to be the coordinate value of the position in the z-axis direction of the group.

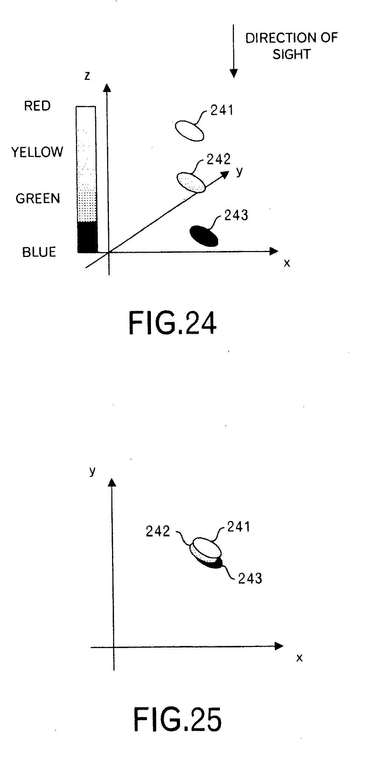

The coloring processing unit 112 then carries out a coloring processing on the group display according to the position of the group in the z-axis direction, and stores the processing result in the storage device (step S77). For example, as illustrated in FIG. 24, the color of each group is set by correlating the position of the group in the z-axis direction with the colors on the color scale. In the example in FIG. 24, the color of group display 241 is red, the color of group display 242 is yellow green, and the color of group display 243 is blue. FIG. 25 illustrates the coordinate space illustrated in FIG. 24 as observed from the positive position of the z coordinate looking toward the origin. By carrying out the coloring processing in this way, it is possible to more easily understand the three-dimensional structure of the flow.

The streamline generator 111 then carries out a streamline rendering processing (step S79). The streamline rendering processing will be explained later. The processing then returns to the calling-source processing.

As explained above, a group display is generated that covers the particles that are included in the same group. By using this kind of display, it is possible to easily know the condition of the flow more than a case of simply displaying only particles.

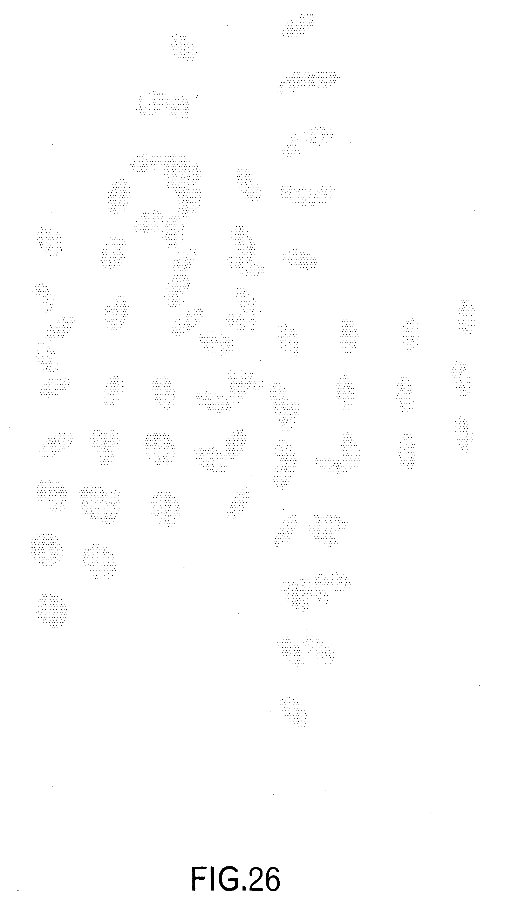

FIG. 26 illustrates an example of group displays that are generated by the processing explained up to this stage. In the example in FIG. 26, group displays covering the particles that belong to the same group are displayed in one color. In order to make it easier to view the drawing, only part of the group displays that were generated are displayed. Here, it is assumed that the direction of sight is in the z-axis direction.

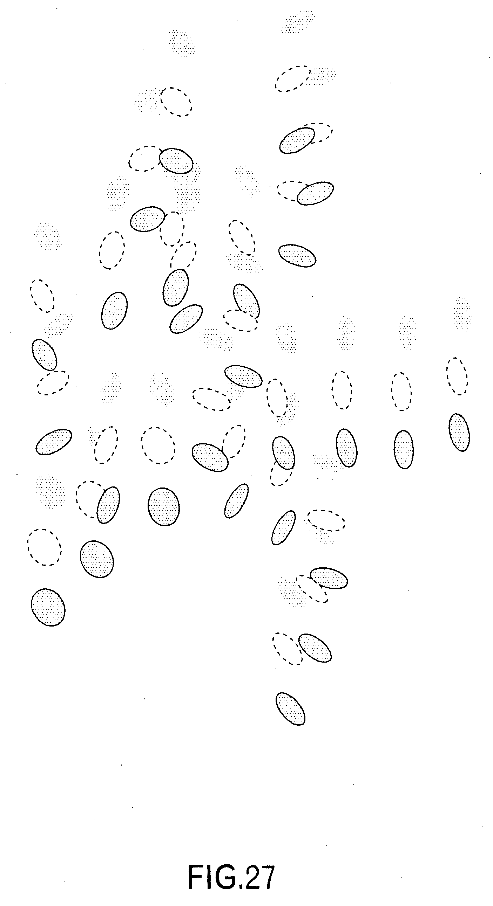

Moreover, the result of further carrying out the coloring processing on the group displays illustrated in FIG. 26 according to the position in the z-axis direction is illustrated in FIG. 27. By carrying out this kind of coloring processing, it becomes possible to suitably understand the three-dimensional structure of the flow even when there is an uniform flow in the z-axis direction, for example. Incidentally, the skeleton structures are omitted in FIGs. 26 and 27.

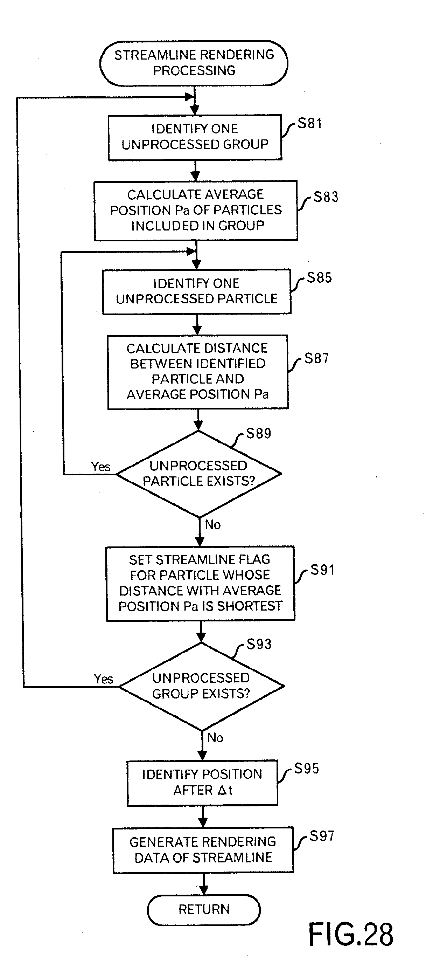

Next, the streamline rendering processing (step S79) will be explained using FIG. 28. First, the streamline generator 111 identifies one unprocessed group from the particle table (hereafter, this will be referred to as the target group) (FIG. 28: step S81). The streamline generator 111 also calculates the average position Pₐ of the particles included in the target group by using the position data that is stored in the velocity data storage unit 107, and stores the calculation result in a storage device such as a main memory (step S83).

Then, the streamline generator 111 identifies one unprocessed particle from among the target group (step S85). The streamline generator 111 calculates the distance between the particle identified at the step S85 and the average position Pₐ that was calculated at the step S83, and stores the calculation result in the storage device such as the main memory (step S87).

The streamline generator 111 then determines whether or not there are any unprocessed particles (step S89). When it is determined that there is an unprocessed particle (step S89: YES route), the processing returns to the step S85 in order to process the next particle.

On the other hand, when it is determined that there aren' t any unprocessed particles (step S89: NO route), the streamline generator 111 sets "1" to the column of the streamline flag in the particle table for a particle whose distance calculated at the step S87 is shortest among the particles belonging to the target group (step S91).

Then, the streamline generator 111 determines whether or not there are any unprocessed groups (step S93). When it is determined that there is an unprocessed group (step S93: YES route), the processing returns to the step S81 in order to process the next group.

On the other hand, when it is determined that there are no unprocessed groups (step S93: NO route), the streamline generator 111 uses data that is stored in the velocity data storage unit 107 for each particle at time t to identify the position of each particle after Δt seconds from the time t (step S95). After that, the streamline generator 111 generates streamline data for each particle at time t from the position at time t to the position after Δt seconds from the time t, then adds the generated data to the group display data, and stores the processing result in the second rendering data storage unit 115 (step S97). For representative particles in the particle table for which "1" is set to the streamline flag, the streamline color is made a different color from the colors of the streamlines of other particles. The processing then returns to the calling-source processing.

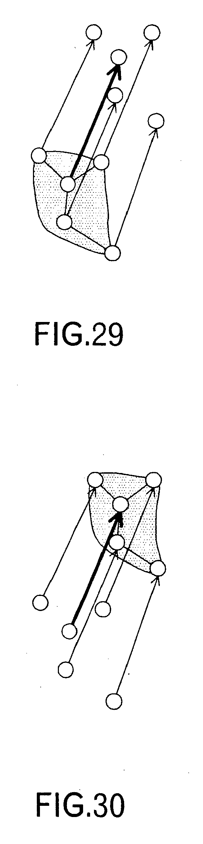

FIG. 29 illustrates a display example when streamlines are added to a group display. In the example in FIG. 29, streamlines are attached to each particle that belongs to the group, and particularly a streamline that has a different color from the colors of the streamlines of other particles is attached to a representative particle that moves in a direction that is close to the direction of the main flow. As a result, it becomes easy to intuitively know the direction of the rough movement of the group. The particles are displayed in order to easily understand the explanation, however, data for displaying particles is not included in the data that is generated by the group display generation processing. Moreover, only the streamline (bold line in FIG. 29) of the representative particle may be attached.

Moreover, an example was given in which streamlines that were generated for each particle at time t were attached to each particle at time t, however, the streamlines may be attached to each particle at time t + Δt. FIG. 30 illustrates an example of a display in this case. By outputting a display as illustrated in FIG. 30 after the display illustrated in FIG. 29, it is possible to more easily know the movements of the positions of the groups over time.

By carrying out the processing explained above, group display data and streamline data are generated and stored in the second rendering data storage unit 115.

On the other hand, the particle flow generator 103 uses data stored in the simulation result storage unit 105, rendering object storage unit 102 and velocity data storage unit 107 to generate data for displaying the flow using the particle flow (FIG. 6: step S32). Then, the particle flow generator 103 stores the generated data in the first rendering data storage unit 104.

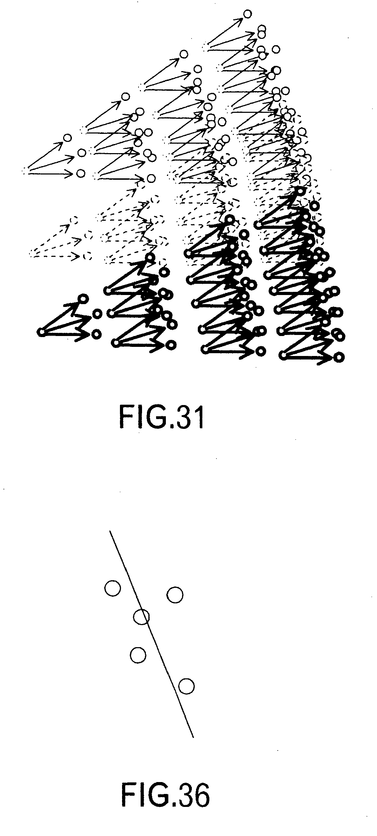

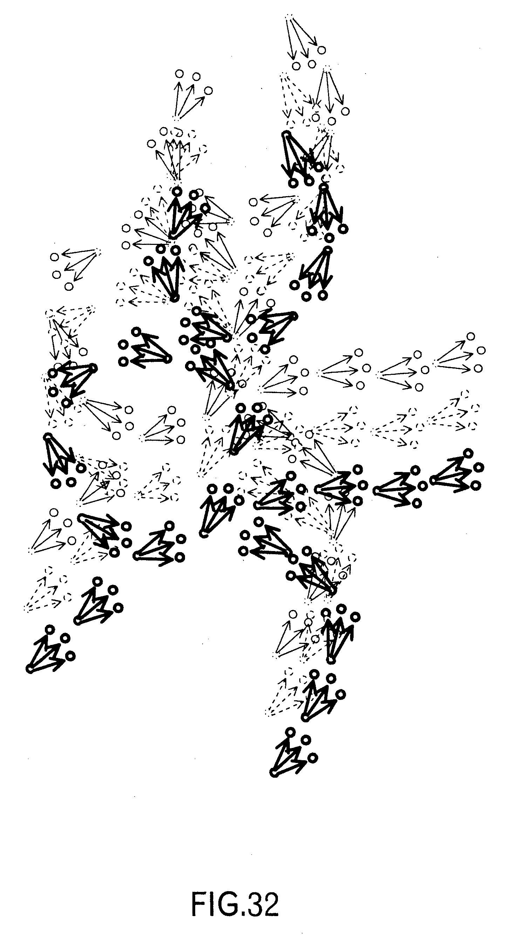

For example, first, data for carrying out the display such as illustrated in FIG. 1 and FIG. 2 is generated. The method for generating data for displaying the flow using the particle flow is well known, so a detailed explanation is omitted. By carrying out the coloring of particles and streamlines according to the position in the z-axis direction, data for carrying out a display such as illustrated in FIG. 31 and FIG. 32 is generated. The rules for coloring are the same as described in the explanation of the processing of the step S77. In other words, bold lines represent blue color, dotted lines represent yellow green color, and normal lines represent red color. Data generated in this way is then used in the processing by the rendering processing unit 116.

Then, the grouping processing unit 109 determines whether or not there are any unprocessed time t (step S33). When it is determined that there is an unprocessed time t (step S33: YES route), the grouping processing unit 109 sets t = t + 1 in order to carry out a processing for the next time (step S35). The processing then returns to the step S7 via a terminal D.

On the other hand, when there are no unprocessed time t (step S33: NO route), the rendering processing unit 116 reads data for displaying the flow by the particle flow from the first rendering data storage unit 104, and reads the group display data from the second rendering data storage unit 115. The rendering processing unit 116 then carries out a processing to superimpose and display the particles, streamlines and group displays, and stores the display data, which is the processing result, in the third rendering data storage unit 117 (step S37).

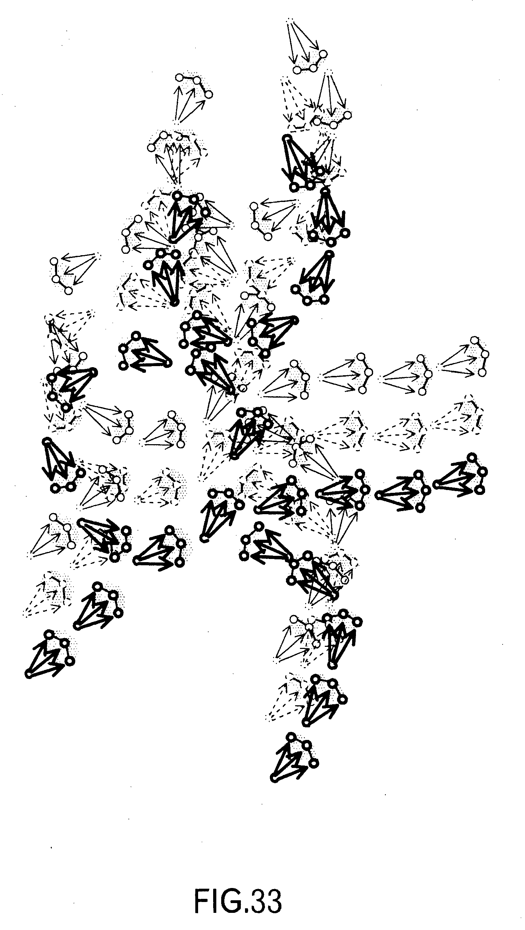

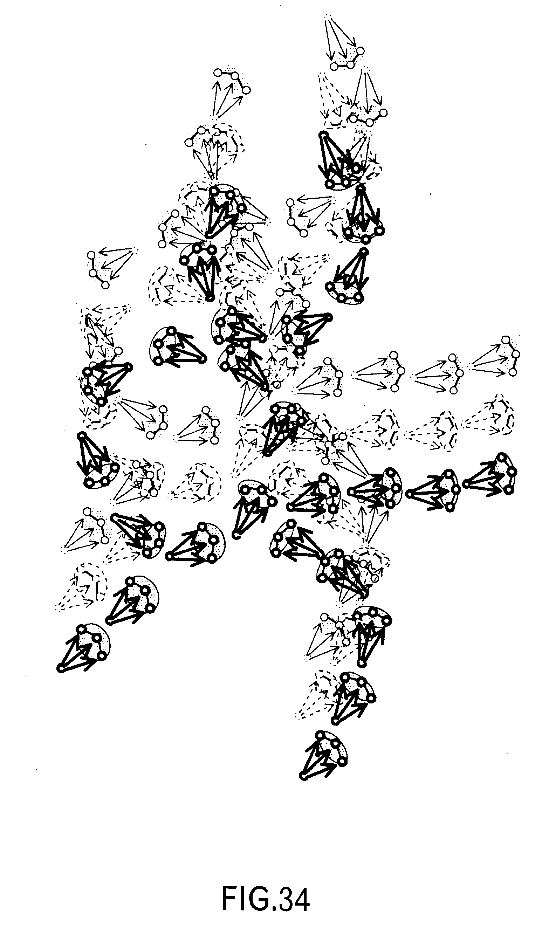

With the processing up to this point, display data for carrying out a display such as illustrated in FIG. 33 and FIG. 34, for example, is generated. In the example in FIG. 33, group displays are attached to particles belonging to the same group. Then, in the example in FIG. 34, the coloring processing is further carried out on the group displays in the example in FIG. 33. In FIG. 33 and FIG. 34, in order for the drawing to be easier to view, streamline data that was generated by the group display generator 108 is not used.

The graphics processing unit 118 then carries out a processing to cause display data that is stored in the third rendering data storage unit 117 to be displayed by the display unit 119 (step S39). The processing then ends.

At the step S39, a processing such as described in the following is carried out. In other words, display data for carrying out the display such as illustrated in FIG. 33 and FIG. 34 is generated for each time t, so the generated display data is continuously displayed. Moreover, display data for displaying the flow by the particle flow may not be displayed among the display data that is stored in the third rendering data storage unit 117. For example, streamline data that was generated at the step S79 or S127 may be added to the group displays as illustrated in FIG. 26 and FIG. 27 to continuously carry out the display.

By carrying out the processing described above, particles that are presumed to be at the same position before time Δt belong to the same group, so it is possible to easily know the movement of the particles in a diffusion field.

### [Embodiment 2]

Next, a second embodiment will be explained. In this second embodiment, group displays are generated by a group display generation processing that differs from that of the first embodiment. In the following, the group display generation processing in this second embodiment will be explained.

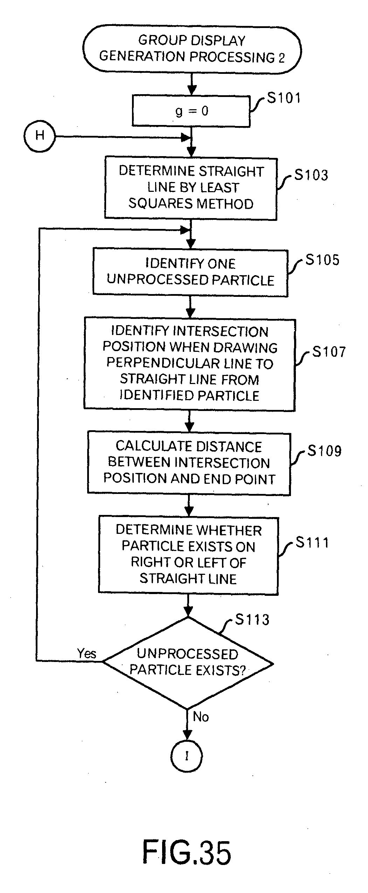

The configuration of the information processing apparatus 1 in the second embodiment is the same as that of the information processing apparatus 1 in the first embodiment. First, the object generator 110 of the group display generator 108 sets "0" to the group number g as the initial value (FIG. 35: step S101).

Then, the object generator 110 reads position data of particles belonging to a group having the group number g from the velocity data storage unit 107, and determines a straight line whose sum of the squares of the distances from the respective particles becomes minimum, by the least squares method, and then stores data for the determined straight line in a storage device (step S103). With the processing of the step S103, data for a straight line as illustrated in FIG. 36 is generated.

The object generator 110 then identifies one unprocessed particle from among the particles belonging to the group having the group number g (hereafter, this particle is referred to as the processing target particle) (step S105). The object generator 110 also identifies the position of an intersection point of the determined straight line with a perpendicular line where the perpendicular line is drawn from the processing target particle to the determined straight line, and stores the identified position in the grouping table (step S107).

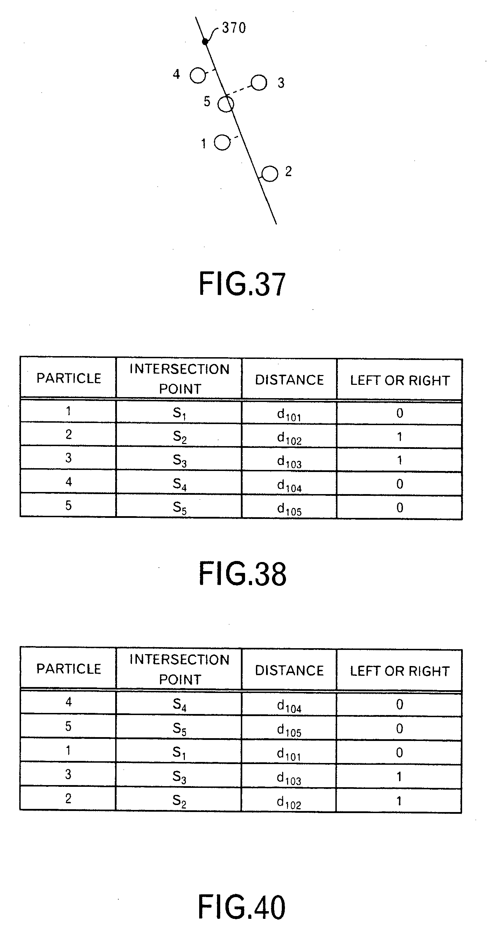

Moreover, the object generator 110 calculates the distance from a point set on the straight line (hereafter, called the end point) to the intersection point of the straight line with the perpendicular line, and stores the calculated distance in the grouping table (step S109). The end point is set at a position such as illustrated with 370 in FIG. 37.

The object generator 110 then uses the position data for the processing target particle to determine whether the processing target particle is on the right or the left of the straight line, and stores the determination result in the grouping table (step S111). In this embodiment, it is presumed that the coordinate space is observed in a direction from the positive position of the z coordinate on the z axis toward the origin, and that the observer's right is "right" and the observer's left is "left". For example, in the case of Fig. 37, particles 4, 5 and 1 are determined to be on the left of the straight line, and particles 3 and 2 are determined to be on the right of the straight line.

FIG. 38 illustrates an example of data that is stored in the grouping table in this second embodiment. In the example in FIG. 38, the particle number, the position of the intersection point of the perpendicular line with the straight line, the distance from the end point, and the determination result of the left or right are stored. When the determination result of the left or right is "0", the particle is located on the left of the straight line, and when the determination result of the left or right is "1", the particle is located on the right of the straight line. This kind of table is generated for each group.

Then, the object generator 110 determines whether or not there are any unprocessed particles (step S113). When it is determined that there is an unprocessed particle (step S113: YES route), the processing returns to the step S105 in order to process the next particle.

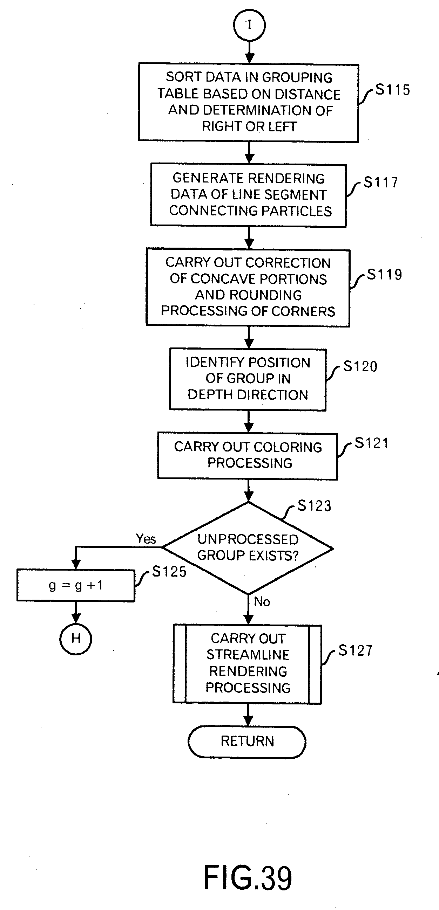

On the other hand, when it is determined that there are no unprocessed particles (step S113: NO route), the processing moves to step S115 in FIG. 39 via a terminal I.

Moving to an explanation of FIG. 39, the object generator 110 sorts the data in the grouping table based on the distance and the determination result of the left or right (step S115). For example, when the data illustrated in FIG. 38 is sorted, the data becomes as illustrated in FIG. 40. In other words, the particles in the first to third lines are particles that are located on the left of the straight line, and are the particle 4, particle 5 and particle 1 are located closer to the end point in this order. Moreover, the particles in the fourth and fifth lines are particles that are located on the right of the straight line, and the particles 3 is located closer to the end point than the particle 2.

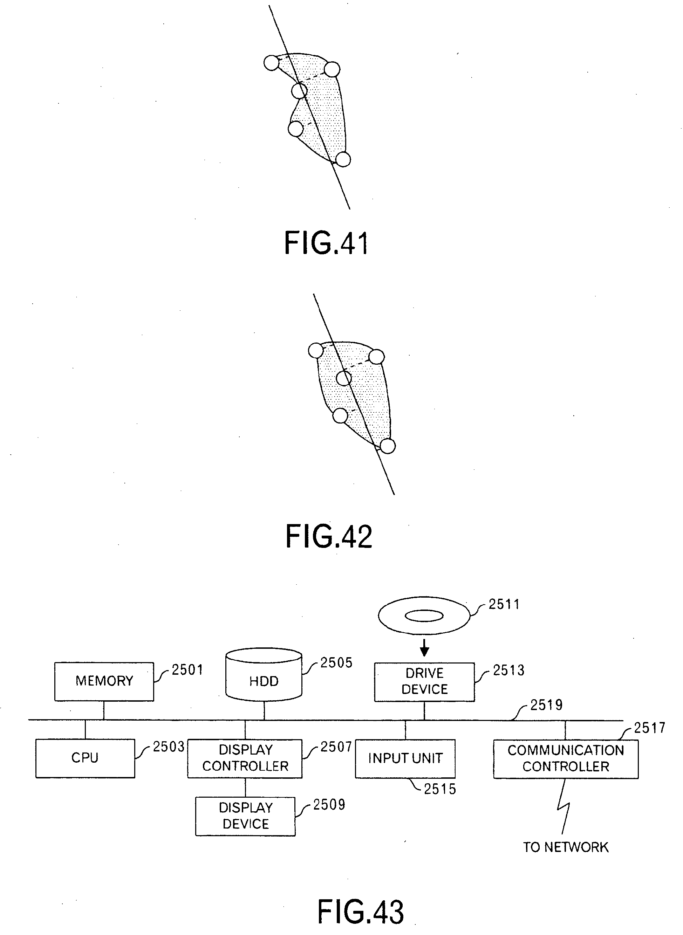

Then, the object generator 110 generates rendering data for line segments that connect between particles, and stores that data in a storage device (step S117). For example, in the example in FIG. 40, first, for the particles that are located on the left side of the straight line, the object generator 110 generates rendering data for the line segment that connects between particle 4 and particle 5, whose intersection points of the perpendicular lines with the straight line are adjacent, and generates rendering data for the line segment that connects between particle 5 and particle 1, whose intersection points of the perpendicular lines with the straight line are adjacent. Moreover, for the particles that are located on the right side of the straight line, the object generator 110 generates rendering data for the line segment that connects between particle 3 and particle 2, whose intersection points of the perpendicular lines with the straight line are adjacent. Furthermore, the object generator 110 generates rendering data for the line segment that connects between the particle 4, which is one end of the structure generated on the left side of the straight line, and the particle 3, which is the particle that is closer to the particle 4 among the particles located on the end of the structure generated on the right side of the straight line. The object generator 110 also generates rendering data for the line segment that connects between the particle 1, which is another end of the structure generated on the left side of the straight line, and the particle 2, which is the particle on the other end of the structure generated on the right side of the straight line. When the coloring is made for the structure generated as described above, a structure as illustrated in FIG. 41 is generated.

Then, the object generator 110 carries out correction of concave sections and rounding processing of corners for the structure generated by the processing of the step S117, generates group display data, and stores the generated display data in the storage device (step S119). These processing is the same as those explained in the first embodiment. With the processing up to the step S119, data such as illustrated in FIG. 42 is generated.

Moreover, the coloring processing unit 112 uses position data that is stored in the velocity data storage unit 107 to identify the position in the z-axis direction of the group having the group number g (step S120). Here, the average of the positions of the particles belonging to the group is taken to be the position of the group.

Then, the coloring processing unit 112 carries out the coloring processing of the group display according to the position of the group in the z-axis direction, and stores the processing result in the storage device (step S121). The coloring processing is the same as that explained in the first embodiment.

The object generator 110 then determines whether or not there are any unprocessed groups (step S123). When it is determined that there is an unprocessed group (step S123: YES route), the object generator 110 sets g = g + 1 as the group number g in order to process the next group (step S125). The processing then returns to the step S103 via a terminal H.

On the other hand, when it is determined that there are no unprocessed groups (step S123: NO route), the streamline generator 111 carries out the streamline rendering processing (step S127). The streamline rendering processing is the same as that explained in the first embodiment. The processing then returns to the calling-source processing.

By carrying out the processing such as described above, it is possible to generate a group display having a suitable shape.

Although the embodiments of this technique were explained, this technique is not limited to the embodiments. For example, the aforementioned functional configuration of the information processing apparatus 1 does not always correspond to an actual program module configuration.

In addition, the respective structures of the aforementioned tables are mere examples, and the data structures are not limited to the aforementioned examples. Furthermore, as for the processing flow, the order of the steps may be exchanged as long as the processing result does not change. Moreover, the steps may be executed in parallel.

Moreover, in the aforementioned example, the color of the group display is set according to the position in the z-axis direction. However, the direction used when the color is set is not limited to the z-axis direction. The x-axis direction, y-axis direction or an arbitrary direction may be selected according to the direction of the flow in the coordinate space, and the color may be changed according to the position in the selected axis direction.

Moreover, in the aforementioned example, the smoothing processing of the concave portions and rounding processing of the corners are carried out. However, in order to shorten the processing time, these processing may be omitted.

In addition, the least squares method is used in the second embodiment. However, a method of the principal component analysis may be utilized.

Furthermore, in the aforementioned example, one computer is used to carry out the aforementioned processing. However, plural computers may be used to execute the aforementioned processing.

In addition, the aforementioned information processing apparatus 1 is a computer device as illustrated in FIG. 43. That is, a memory 2501 (storage device), a CPU 2503 (processor), aharddiskdrive (HDD) 2505, a display controller 2507 connected to a display device 2509, a drive device 2513 for a removable disk 2511, an input device 2515, and a communication controller 2517 for connection with a network are connected through a bus 2519 as illustrated in FIG. 43. An operating system (OS) and an application program for carrying out the foregoing processing in the embodiment, are stored in the HDD 2505, and when executed by the CPU 2503, they are read out from the HDD 2505 to the memory 2501. As the need arises, the CPU 2503 controls the display controller 2507, the communication controller 2517, and the drive device 2513, and causes them to perform necessary operations. Besides, intermediate processing data is stored in the memory 2501, and if necessary, it is stored in the HDD 2505. In this embodiment of this technique, the application program to realize the aforementioned functions is stored in the computer-readable, non-transitory removable disk 2511 and distributed, and then it is installed into the HDD 2505 from the drive device 2513. It may be installed into the HDD 2505 via the network such as the Internet and the communication controller 2517. In the computer as stated above, the hardware such as the CPU 2503 and the memory 2501, the OS and the necessary application programs systematically cooperate with each other, so that various functions as described above in details are realized.

Incidentally, the respective processing unit illustrated in FIG. 3 may be realized by a combination of the CPU 2503 in FIG. 43 and programs, in other words, executing, by the CPU 2503, the programs. Moreover, the respective data storage unit illustrated in FIG. 3 may be realized as the memory 2501 or HDD 2505 in FIG. 43.

The embodiments described above are summarized as follows:

Avisualizationprocessing methodrelatingtothe embodiments includes: (A) classifying plural particles in a diffusion field into plural groups, based on data of positions and velocities of the plural particles, so that particles between which a distance is equal to or less than a predetermined distance and of which an absolute value of a difference between velocity vectors is equal to or less than a predetermined value among the plural particles are classified to a same group; (B) first generating, for each of the plural groups, group display data for particles belonging to the group; and (C) second generating display data by attaching the generated group display data to particle display data for displaying the particles belonging to the group.

By carrying out such a processing, because particles which were presumed to be placed at the same position before the minute time are classified to the same group, it becomes possible to easily understand the movement of the particles in the diffusion field.

Moreover, the first generating may further include: identifying, for each of the plural groups, a position of the group in a direction of a first axis by using data of positions of the particles belonging to the group; and determining a color to be used for a group display according to the identified position of the group. For example, when the uniform flow is in a depth direction, there is a case where the three-dimensional structure of the flow cannot be easily understood depending on the direction of the sight. In such a case, when the color of the group display is changed according to the position of the depth direction, it becomes possible to easily understand the three-dimensional structure of the flow.

Moreover, the visualization processing method may further include: identifying, for each of the plural groups, a particle closest to an average of positions of the particles belonging to the group, from among the particle belonging to the group; generating data of a streamline from a position of the identified particle to a position of the identified particle after a predetermined time; and adding the generated data of the streamline to the group display data. By carrying out such a processing, when displaying the streamline for each group, it becomes possible to easily grasp the rough status of the flow.

Furthermore, the first generating may further include: generating, for each of the plural groups, data of a first structure, by connecting N-1 segments between the particles belonging to the group so as not to form a loop in ascending order of lengths of the segments, wherein N represents the number of particles belonging to the group; and generating the group display data by thickening thickness of the segments included in the first structure and smoothing a concave portion included in the first structure. Thus, the shape of the group display becomes a natural shape near the sphere or ellipsoid.

Moreover, the first generating may include: identifying, for each of the plurality of groups, a straight line based on a regression analysis by using data of positions of particles belonging to the group; classifying, for each of the plurality of groups, the particles belonging to the group into a first group and a second group based on a positional relationship between the identified straight line and the particles belonging to the group; identifying, for each of particles belonging to the first group, a position at which a perpendicular line from the particle to the identified straight line intersects with the identified straight line; generating data of a second structure by connecting, by a line segment, particles whose identified positions are adjacent to each other; identifying, for each of particles belonging to the second group, a position at which a perpendicular line from the particle to the identified straight line intersects with the identified straight line; generating data of a third structure by connecting, by a line segment, particles whose identified positions are adjacent to each other; generating data of a fourth structure by connecting, by a line segment, an edge of the second structure and an edge of the third structure; and generating the group display data by smoothing a concave portion of the fourth structure. Even when such a processing is carried out, the shape of the group display becomes an appropriate shape.

Incidentally, it is possible to create a program causing a computer to execute the aforementioned processing, and such a program is stored in a computer readable storage medium or storage device such as a flexible disk, CD-ROM, DVD-ROM, magneto-optic disk, a semiconductor memory, and hard disk. In addition, the intermediate processing result is temporarily stored in a storage device such as a main memory or the like.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present inventions have been described in detail, it should be understood that the various changes, substitutions, and alterations could be made hereto without departing from the scope of the invention.

## Claims

1. A visualization processing method, comprising:
classifying, by using a computer, a plurality of particles in a diffusion field into a plurality of groups, based on data of positions and velocities of the plurality of particles, so that particles between which a distance is equal to or less than a predetermined distance and of which an absolute value of a difference between velocity vectors is equal to or less than a predetermined value among the plurality of particles are classified to a same group;
generating, by using the computer, for each of the plurality of groups, group display data for particles belonging to the group; and
generating, by using the computer, display data by attaching the generated group display data to particle display data for displaying the particles belonging to the group.

2. The visualization processing method as set forth in claim 1, wherein the generating group display data further comprises:
identifying, for each of the plurality of groups, a position of the group in a direction of a first axis by using data of positions of the particles belonging to the group; and
determining a color to be used for a group display according to the identified position of the group.

3. The visualization processing method as set forth in claim 1 wherein the procedure further comprises:
identifying, for each of the plurality of groups, a particle closest to an average of positions of the particles belonging to the group, from among the particle belonging to the group;
generating data of a streamline from a position of the identified particle to a position of the identified particle after a predetermined time; and
adding the generated data of the streamline to the group display data.

4. The visualization processing method as set forth in claim 1 wherein the generating group display data further comprises:
generating, foreachofthepluralityofgroups, data of a first structure, by connecting N-1 segments between the particles belonging to the group so as not to form a loop in ascending order of lengths of the segments, wherein N represents the number of particles belonging to the group; and
generating the group display data by thickening thickness of the segments included in the first structure and smoothing a concave portion included in the first structure.

5. The visualization processing method as set forth in claim 1 wherein the generating group display data comprises:
identifying, for each of the plurality of groups, a straight line based on a regression analysis by using data of positions of particles belonging to the group;
classifying, for each of the plurality of groups, the particles belonging to the group into a first group and a second group based on a positional relationship between the identified straight line and the particles belonging to the group;
identifying, for each of particles belonging to the first group, a position at which a perpendicular line from the particle to the identified straight line intersects with the identified straight line;
generating data of a second structure by connecting, by a line segment, particles whose identified positions are adjacent to each other;
identifying, for each of particles belonging to the second group, a position at which a perpendicular line from the particle to the identified straight line intersects with the identified straight line;
generating data of a third structure by connecting, by a line segment, particles whose identified positions are adjacent to each other;
generating data of a fourth structure by connecting, by a line segment, an edge of the second structure and an edge of the third structure; and
generating the group display data by smoothing a concave portion of the fourth structure.

6. A visualization processing apparatus, comprising:
a memory; and
a processor using the memory and configured to execute a procedure, the procedure comprising:
classifying a plurality of particles in a diffusion field into a plurality of groups, based on data of positions and velocities of the plurality of particles, so that particles between which a distance is equal to or less than a predetermined distance and of which an absolute value of a difference between velocity vectors is equal to or less than a predetermined value among the plurality of particles are classified to a same group;
generating, for each of the plurality of groups, group display data for particles belonging to the group; and
generating display data by attaching the generated group display data to particle display data for displaying the particles belonging to the group.

7. The visualization processing apparatus as set forth in claim 6, wherein the generating group display data further comprises:
identifying, for each of the plurality of groups, a position of the group in a direction of a first axis by using data of positions of the particles belonging to the group; and
determining a color to be used for a group display according to the identified position of the group.

8. The visualization processing apparatus as set forth in claim 6, wherein the procedure further comprises:
identifying, for each of the plurality of groups, a particle closest to an average of positions of the particles belonging to the group, from among the particle belonging to the group;
generating data of a streamline from a position of the identified particle to a position of the identified particle after a predetermined time; and
adding the generated data of the streamline to the group display data.

9. The visualization processing apparatus as set forth in claim 6, wherein the generating group display data further comprises:
generating, for each of the plurality of groups, data of a first structure, by connecting N-1 segments between the particles belonging to the group so as not to form a loop in ascending order of lengths of the segments, wherein N represents the number of particles belonging to the group; and
generating the group display data by thickening thickness of the segments included in the first structure and smoothing a concave portion included in the first structure.

10. The visualization processing apparatus as set forth in claim 6, wherein the generating group display data comprises:
identifying, for each of the plurality of groups, a straight line based on a regression analysis by using data of positions of particles belonging to the group;
classifying, for each of the plurality of groups, the particles belonging to the group into a first group and a second group based on a positional relationship between the identified straight line and the particles belonging to the group;
identifying, for each of particles belonging to the first group, a position at which a perpendicular line from the particle to the identified straight line intersects with the identified straight line;
generating data of a second structure by connecting, by a line segment, particles whose identified positions are adjacent to each other;
identifying, for each of particles belonging to the second group, a position at which a perpendicular line from the particle to the identified straight line intersects with the identified straight line;
generating data of a third structure by connecting, by a line segment, particles whose identified positions are adjacent to each other;
generating data of a fourth structure by connecting, by a line segment, an edge of the second structure and an edge of the third structure; and
generating the group display data by smoothing a concave portion of the fourth structure.

11. A computer program for causing a computer to execute a method as set forth in any one of claims 1 to 5.

## Patentansprüche

1. Visualisierungsverarbeitungsverfahren, umfassend:
unter Verwendung eines Computers, Klassifizieren mehrerer Teilchen in einem Diffusionsfeld in mehrere Gruppen auf der Basis von Daten zu Positionen und Geschwindigkeiten der mehreren Teilchen, so dass Teilchen, zwischen denen ein Abstand kleiner oder gleich einem vorgegebenen Abstand ist und von denen ein Absolutwert einer Differenz zwischen Geschwindigkeitsvektoren kleiner oder gleich einem vorgegebenen Wert ist, unter den mehreren Teilchen in dieselbe Gruppe eingeordnet werden;
unter Verwendung des Computers, Erzeugen von Gruppenanzeigedaten für Teilchen, die zur Gruppe gehören, für jede der mehreren Gruppen; und
unter Verwendung des Computers, Erzeugen von Anzeigedaten durch Verbinden der erzeugten Gruppenanzeigedaten mit Teilchenanzeigedaten zum Anzeigen der Teilchen, die zu der Gruppe gehören.

2. Visualisierungsverarbeitungsverfahren nach Anspruch 1, wobei das Erzeugen von Gruppenanzeigedaten ferner umfasst:
für jede der mehreren Gruppen, Identifizieren einer Position der Gruppe in einer Richtung einer ersten Achse durch Verwenden der Daten von Positionen der Teilchen, die zur Gruppe gehören; und
Bestimmen einer Farbe, die für eine Gruppenanzeige gemäß der identifizierten Position der Gruppe verwendet werden soll.

3. Visualisierungsverarbeitungsverfahren nach Anspruch 1, wobei das Verfahren ferner umfasst:
für jede der mehreren Gruppen, Identifizieren eines Teilchens, das einem Durchschnitt der Positionen der Teilchen, die zur Gruppe gehören, aus den Teilchen, die zur Gruppe gehören, am nächsten kommt;
Erzeugen von Daten einer Strömungslinie von einer Position des identifizierten Teilchens bis zu einer Position des identifizierten Teilchens nach einer vorgegebenen Zeit; und
Hinzufügen der erzeugten Daten der Strömungslinie zu den Gruppenanzeigedaten.

4. Visualisierungsverarbeitungsverfahren nach Anspruch 1, wobei das Erzeugen von Gruppenanzeigedaten ferner umfasst:
für jede der mehreren Gruppen, Erzeugen von Daten einer ersten Struktur durch Verbinden von N-1 Segmenten zwischen den Teilchen, die zur Gruppe gehören, um so keine Schleife in aufsteigender Ordnung von Segmentlängen zu bilden, wobei N die Zahl von Teilchen darstellt, die zur Gruppe gehören; und
Erzeugen der Gruppenanzeigedaten durch Erhöhen der Dicke der Segmente, die in der ersten Struktur enthalten sind, und durch Glätten eines konkaven Teils, der in der ersten Struktur enthalten ist.

5. Visualisierungsverarbeitungsverfahren nach Anspruch 1, wobei das Erzeugen von Gruppenanzeigedaten umfasst:
für jede der mehreren Gruppen, Identifizieren einer Geraden auf der Basis einer Regressionsanalyse durch Verwenden von Daten von Positionen der Teilchen, die zur Gruppe gehören;
für jede der mehreren Gruppen, Klassifizieren der Teilchen, die zur Gruppe gehören, in eine neue erste Gruppe und eine zweite Gruppe auf der Grundlage einer Lagebeziehung zwischen der identifizierten Geraden und den Teilchen, die zur Gruppe gehören;
für jedes der Teilchen, die zur ersten Gruppe gehören, Identifizieren einer Position, an der eine senkrechte Linie vom Teilchen zur identifizierten Geraden die identifizierte Gerade schneidet;
Erzeugen von Daten einer zweiten Struktur durch Verbinden von Teilchen, deren identifizierte Positionen einander benachbart sind, durch eine Strecke;
für jedes der Teilchen, die zur zweiten Gruppe gehören, Identifizieren einer Position, an der eine senkrechte Linie vom Teilchen zur identifizierten Geraden die identifizierte Gerade schneidet;
Erzeugen von Daten einer dritten Struktur durch Verbinden von Teilchen, deren identifizierte Positionen einander benachbart sind, durch eine Strecke;
Erzeugen von Daten einer vierten Struktur durch Verbinden einer Kante der zweiten Struktur und einer Kante der dritten Struktur durch eine Strecke; und
Erzeugen der Gruppenanzeigedaten durch Glätten eines konkaven Teils der vierten Struktur.

6. Visualisierungsverarbeitungsvorrichtung, umfassend:
einen Speicher; und
einen Prozessor, der den Speicher verwendet und zum Ausführen eines Verfahrens ausgelegt ist, wobei das Verfahren Folgendes umfasst:
Klassifizieren mehrerer Teilchen in einem Diffusionsfeld in mehrere Gruppen auf der Basis von Daten zu Positionen und Geschwindigkeiten der mehreren Teilchen, so dass Teilchen, zwischen denen ein Abstand kleiner oder gleich einem vorgegebenen Abstand ist und von denen ein Absolutwert einer Differenz zwischen Geschwindigkeitsvektoren kleiner oder gleich einem vorgegebenen Wert ist, unter den mehreren Teilchen in eine selbe Gruppe eingeordnet werden;
für jede der mehreren Gruppen, Erzeugen von Gruppenanzeigedaten für Teilchen, die zur Gruppe gehören; und
Erzeugen von Anzeigedaten durch Verbinden der erzeugten Gruppenanzeigedaten mit Teilchenanzeigedaten zum Anzeigen der Teilchen, die zu der Gruppe gehören.

7. Visualisierungsverarbeitungsvorrichtung nach Anspruch 6, wobei das Erzeugen von Gruppenanzeigedaten ferner umfasst:
für jede der mehreren Gruppen, Identifizieren einer Position der Gruppe in einer Richtung einer ersten Achse durch Verwenden der Daten von Positionen der Teilchen, die zur Gruppe gehören; und
Bestimmen einer Farbe, die für eine Gruppenanzeige gemäß der identifizierten Position der Gruppe verwendet werden soll.

8. Visualisierungsverarbeitungsvorrichtung nach Anspruch 6, wobei die Vorrichtung ferner umfasst:
für jede der mehreren Gruppen, Identifizieren eines Teilchens, das einem Durchschnitt der Positionen der Teilchen, die zur Gruppe gehören, aus den Teilchen, die zur Gruppe gehören, am nächsten kommt;
Erzeugen von Daten einer Strömungslinie von einer Position des identifizierten Teilchens bis zu einer Position des identifizierten Teilchens nach einer vorgegebenen Zeit; und
Hinzufügen der erzeugten Daten der Strömungslinie zu den Gruppenanzeigedaten.

9. Visualisierungsverarbeitungsvorrichtung nach Anspruch 6, wobei das Erzeugen von Gruppenanzeigedaten ferner umfasst:
für jede der mehreren Gruppen, Erzeugen von Daten einer ersten Struktur durch Verbinden von N-1 Segmenten zwischen den Teilchen, die zur Gruppe gehören, um so keine Schleife in aufsteigender Ordnung von Segmentlängen zu bilden, wobei N die Zahl von Teilchen darstellt, die zur Gruppe gehören; und
Erzeugen der Gruppenanzeigedaten durch Erhöhen der Dicke der Segmente, die in der ersten Struktur enthalten sind, und durch Glätten eines konkaven Teils, der in der ersten Struktur enthalten ist.

10. Visualisierungsverarbeitungsvorrichtung nach Anspruch 6, wobei das Erzeugen von Gruppenanzeigedaten Folgendes umfasst:
für jeden der mehreren Gruppen, Identifizieren einer Geraden auf der Basis einer Regressionsanalyse durch Verwenden von Daten von Positionen der Teilchen, die zur Gruppe gehören;
für jede der mehreren Gruppen, Klassifizieren der Teilchen, die zur Gruppe gehören, in eine neue erste Gruppe und eine zweite Gruppe auf der Grundlage einer Lagebeziehung zwischen der identifizierten Geraden und den Teilchen, die zur Gruppe gehören;
für jedes der Teilchen, die zur ersten Gruppe gehören, Identifizieren einer Position, an der eine senkrechte Linie vom Teilchen zur identifizierten Geraden die identifizierte Gerade schneidet;
Erzeugen von Daten einer zweiten Struktur durch Verbinden von Teilchen, deren identifizierte Positionen einander benachbart sind, durch ein Liniensegment;
für jedes der Teilchen, die zur zweiten Gruppe gehören, Identifizieren einer Position, an der eine senkrechte Linie vom Teilchen zur identifizierten Geraden die identifizierte Gerade schneidet;
Erzeugen von Daten einer dritten Struktur durch Verbinden von Teilchen, deren identifizierte Positionen einander benachbart sind, durch eine Strecke;
Erzeugen von Daten einer vierten Struktur durch Verbinden einer Kante der zweitens Struktur und einer Kante der dritten Struktur durch eine Strecke; und
Erzeugen der Gruppenanzeigedaten durch Glätten eines konkaven Teils der vierten Struktur.

11. Computerprogramm, mit dem bewirkt wird, dass ein Computer ein Verfahren ausführt, wie in einem der Ansprüche 1 bis 5 dargelegt.

## Revendications

1. Procédé de traitement de visualisation comprenant :
la classification, en utilisant un ordinateur, d'une pluralité de particules dans un champ de diffusion en une pluralité de groupes, en se basant sur des données de position et de vitesse de la pluralité de particules, de sorte que les particules entre lesquelles la distance est inférieure ou égale à une distance prédéterminée et dont la valeur absolue de la différence entre les vecteurs vitesse est inférieure ou égale à une valeur prédéterminée parmi la pluralité de particules, sont classées dans un même groupe ;
la génération, en utilisant l'ordinateur, pour chaque groupe de la pluralité de groupes, de données d'affichage de groupe pour les particules appartenant au groupe ; et
la génération, en utilisant l'ordinateur, de données d'affichage en attachant les données d'affichage de groupe générées aux données d'affichage de particules pour afficher les particules appartenant au groupe.

2. Procédé de traitement de visualisation selon la revendication 1, dans lequel la génération de données d'affichage de groupe comprend en outre :
l'identification, pour chaque groupe de la pluralité de groupes, de la position du groupe dans la direction d'un premier axe en utilisant les données de position des particules appartenant au groupe ; et
la détermination d'une couleur à utiliser pour un affichage de groupe en fonction de la position identifiée du groupe.

3. Procédé de traitement de visualisation selon la revendication 1, dans lequel la procédure comprend en outre :
l'identification, pour chaque groupe de la pluralité de groupes, d'une particule la plus proche de la moyenne des positions des particules appartenant au groupe, parmi les particules appartenant au groupe ;
la génération de données d'une ligne de courant depuis une position de la particule identifiée jusqu'à une position de la particule identifiée après un temps prédéterminé ; et
l'addition des données générées de la ligne de courant avec les données d'affichage de groupe.

4. Procédé de traitement de visualisation selon la revendication 1, dans lequel la génération de données d'affichage de groupes comprend en outre :
la génération, pour chaque groupe de la pluralité de groupes, de données d'une première structure, en reliant N-1 segments entre les particules appartenant au groupe de façon à ne pas former de boucle dans l'ordre ascendant des longueurs des segments, dans lequel N représente le nombre de particules appartenant au groupe ; et
la génération des données d'affichage de groupe en épaississant l'épaisseur des segments inclus dans la première structure et en lissant une partie concave incluse dans la première structure.

5. Procédé de traitement de visualisation selon la revendication 1, dans lequel la génération des données d'affichage de groupe comprend :
l'identification, pour chaque groupe de la pluralité de groupes, d'une ligne droite en se basant sur une analyse de régression en utilisant les données de position des particules appartenant au groupe ;
la classification, pour chaque groupe de la pluralité de groupes, des particules appartenant au groupe dans un premier groupe et un deuxième groupe, en se basant sur une relation de position entre la ligne droite identifiée et les particules appartenant au groupe ;
l'identification, pour chacune des particules appartenant au premier groupe, d'une position dans laquelle une ligne perpendiculaire allant de la particule à la ligne droite identifiée coupe la ligne droite identifiée ;
la génération de données d'une deuxième structure en reliant, par un segment de droite, les particules dont les positions identifiées sont adjacentes entre elles ;
l'identification, pour chacune des particules appartenant au deuxième groupe, d'une position dans laquelle une ligne perpendiculaire allant de la particule à la ligne droite identifiée coupe la ligne droite identifiée ;
la génération de données d'une troisième structure en reliant, par un segment de droite, les particules dont les positions identifiées sont adjacentes entre elles ;
la génération de données d'une quatrième structure en reliant, par un segment de droite, un bord de la deuxième structure et un bord de la troisième structure ; et
la génération des données d'affichage de groupe par lissage d'une partie concave de la quatrième structure.

6. Dispositif de traitement de visualisation comprenant :
une mémoire ; et
un processeur utilisant la mémoire et configuré pour exécuter une procédure, la procédure comprenant :
la classification d'une pluralité de particules dans un champ de diffusion en une pluralité de groupes, en se basant sur des données de position et de vitesse de la pluralité de particules, de sorte que les particules entre lesquelles la distance est inférieure ou égale à une distance prédéterminée et dont la valeur absolue de la différence entre les vecteurs vitesse est inférieure ou égale à une valeur prédéterminée parmi la pluralité de particules, sont classées dans un même groupe ;
la génération pour chaque groupe de la pluralité de groupes, de données d'affichage de groupe pour les particules appartenant au groupe ; et
la génération de données d'affichage en attachant les données d'affichage de groupe générées aux données d'affichage de particules pour afficher les particules appartenant au groupe.

7. Dispositif de traitement de visualisation selon la revendication 6, dans lequel la génération de données d'affichage de groupe comprend en outre :
l'identification, pour chaque groupe de la pluralité de groupes, de la position du groupe dans la direction d'un premier axe en utilisant les données de position des particules appartenant au groupe ; et
la détermination d'une couleur à utiliser pour un affichage de groupe en fonction de la position identifiée du groupe.

8. Dispositif de traitement de visualisation selon la revendication 6, dans lequel la procédure comprend en outre :
l'identification, pour chaque groupe de la pluralité de groupes, d'une particule la plus proche de la moyenne des positions des particules appartenant au groupe, parmi les particules appartenant au groupe ;
la génération de données d'une ligne de courant depuis une position de la particule identifiée jusqu'à une position de la particule identifiée après un temps prédéterminé ; et
l'addition des données générées de la ligne de courant avec les données d'affichage de groupe.

9. Dispositif de traitement de visualisation selon la revendication 6, dans lequel la génération de données d'affichage de groupes comprend en outre :
la génération, pour chaque groupe de la pluralité de groupes, de données d'une première structure, en reliant N-1 segments entre les particules appartenant au groupe de façon à ne pas former de boucle dans l'ordre ascendant des longueurs des segments, dans lequel N représente le nombre de particules appartenant au groupe ; et
la génération des données d'affichage de groupe en épaississant l'épaisseur des segments inclus dans la première structure et en lissant une partie concave incluse dans la première structure.

10. Dispositif de traitement de visualisation selon la revendication 6, dans lequel la génération des données d'affichage de groupe comprend :
l'identification, pour chaque groupe de la pluralité de groupes, d'une ligne droite en se basant sur une analyse de régression en utilisant les données de position des particules appartenant au groupe ;
la classification, pour chaque groupe de la pluralité de groupes, des particules appartenant au groupe dans un premier groupe et un deuxième groupe, en se basant sur une relation de position entre la ligne droite identifiée et les particules appartenant au groupe ;
l'identification, pour chacune des particules appartenant au premier groupe, d'une position dans laquelle une ligne perpendiculaire allant de la particule à la ligne droite identifiée coupe la ligne droite identifiée ;
la génération de données d'une deuxième structure en reliant, par un segment de droite, les particules dont les positions identifiées sont adjacentes entre elles ;
l'identification, pour chacune des particules appartenant au deuxième groupe, d'une position dans laquelle une ligne perpendiculaire allant de la particule à la ligne droite identifiée coupe la ligne droite identifiée ;
la génération de données d'une troisième structure en reliant, par un segment de droite, les particules dont les positions identifiées sont adjacentes entre elles ;
la génération de données d'une quatrième structure en reliant, par un segment de droite, un bord de la deuxième structure et un bord de la troisième structure ; et
la génération des données d'affichage de groupe par lissage d'une partie concave de la quatrième structure.

11. Programme informatique pour faire exécuter par un ordinateur un procédé selon l'une quelconque des revendications 1 à 5.
